# EUROPEAN PATENT APPLICATION

(11) **EP 4 737 303 A1**
(43) Date of publication of application: **06.05.2026**
(21) Application number: 25194583.8
(22) Date of filing: 07.08.2025
(51) Int. Cl.: B63B 49/00, B63H 9/02, B63H 21/21, B63B 79/20, B63B 79/40

(54) **DISPLAY DEVICE AND SHIP**

(30) Priority: 30.10.2024 JP 2024190652
(71) Applicant: Sumitomo Heavy Industries Marine & Engineering Co., Ltd., Yokosuka-shi, Kanagawa, 237-8555 (JP)
(72) Inventor: ARAI, Yuji, Kanagawa, 237-8555, (JP); AONO, Takeshi, Kanagawa, 237-8555, (JP)
(74) Representative: Louis Pöhlau Lohrentz

(57) **Abstract**

A display device (64) capable of easily identifying a status on board a ship, and a ship are provided.

A display device (64) visualizes an operation status of a hull (11) relative to environmental information. In a case where an environment such as a wind direction or a wind speed with respect to the ship (1) changes and an operation of each of devices (63) including a wind propulsion unit (10) is adjusted accordingly, the display device (64) can visualize the operation status of the hull (11) accordingly. Therefore, a crew member can easily identify the operation status of the hull (11) by viewing the information visualized on the display device (64). From the above, the status on board the ship (1) can be easily identified.

## Description

### BACKGROUND OF THE INVENTION

### Field of the Invention

The present invention relates to a display device and a ship.

### Description of Related Art

In recent years, a ship that generates thrust using renewable energy such as wind power is known in order to reduce GHG such as CO₂. For example, a ship disclosed in Japanese Unexamined Patent Publication No. 2020-45018 is provided with, on a hull, a wind propulsion unit that propels the hull using wind power in addition to a propeller-based propulsion device.

### SUMMARY OF THE INVENTION

Here, in the ship as described above, an operation status of the hull such as a status of the wind propulsion unit is changed as appropriate in accordance with an environment such as a wind direction or a wind speed. Even though an experienced crew member can identify the operation status of the ship, there is an issue in that some crew members have difficulty in identifying the operation status. From the above, it is required to easily identify the status on board the ship.

The present invention has been made to solve such an issue, and an object of the present invention is to provide a display device capable of easily identifying a status on board a ship, and a ship.

A display device according to an aspect of the present invention displays information related to a ship provided with a wind propulsion unit on a hull, and the display device visualizes an operation status of the hull relative to environmental information.

The display device according to the aspect of the present invention visualizes the operation status of the hull relative to the environmental information. In a case where an environment such as a wind direction or a wind speed with respect to the ship changes and an operation of each of devices including a wind propulsion unit is adjusted accordingly, the display device can visualize the operation status of the hull accordingly. Therefore, a crew member can easily identify the operation status of the hull by viewing the information visualized on the display device. From the above, the status on board the ship can be easily identified.

The display device may visualize a moment acting on the hull based on a force generated by the wind propulsion unit. In this case, the crew member can easily identify what kinds of force and moment are acting on the hull by each wind propulsion unit, through visual information.

The display device may visualize a status of a force generated by the wind propulsion unit. In this case, the crew member can easily identify what kind of force is generated in each wind propulsion unit.

The display device may visualize a relationship between a ship speed of the ship and a required output, and visualize a status of involvement of an output of the wind propulsion unit in the required output. In this manner, the crew member can easily identify how much the wind propulsion unit contributes to the operation of the ship.

The display device may visualize a charge level of a battery. Accordingly, the crew member can easily identify the charge level of the battery, and thus the charging and discharging of the battery can be performed at an appropriate timing.

The ship may include, as navigation modes of the ship, at least: an engine-driven mode in which the ship is propelled only by a propulsion device; an engine-sailing mode in which the ship is propelled by both the propulsion device and the wind propulsion unit; and a sailing mode in which the ship is propelled only by the wind propulsion unit, and the display device may visualize the navigation mode that is being set. In this case, the crew member can easily identify which navigation mode the ship is currently operating in, among the plurality of navigation modes.

The display device may visualize power balance in the ship. Accordingly, the crew member can easily identify the power balance in the ship.

The display device may visualize a fuel economy effect achieved by the wind propulsion unit. In this manner, the crew member can easily identify the fuel economy effect achieved by the wind propulsion unit, and thus the environmental awareness of the crew member can be enhanced.

The display device may share visualization information with land. Accordingly, a worker on land can easily identify the status on board the ship.

A display device according to another aspect of the present invention displays information related to a ship provided with a wind propulsion unit on a hull, and the display device visualizes a utilization ratio between engine propulsion using a propulsion device and wind propulsion using the wind propulsion unit in real time.

The display device according to the present invention visualizes the utilization ratio between the engine propulsion using the propulsion device and the wind propulsion using the wind propulsion unit in real time. In this manner, the display device can display the visualization information on how much the wind propulsion unit contributes to the operation of the ship in real time. Therefore, the crew member can easily identify the degree of contribution of the wind propulsion unit at present by viewing the information visualized on the display device. From the above, the status on board the ship can be easily identified.

The display device may visualize a force or a moment acting on the hull based on a force generated by the wind propulsion unit. In this case, the crew member can easily identify how much the wind propulsion unit contributes to the operation of the hull in real time.

A display device according to still another aspect of the present invention displays information related to a ship provided with a wind propulsion unit on a hull, and the display device visualizes an amount of energy saved by using the wind propulsion unit compared to a case where a propulsion device is used.

The display device according to the aspect of the present invention visualizes the amount of energy saved by using the wind propulsion unit compared to a case where the propulsion device is used. In this manner, the display device can display the visualization information on how much the energy can be saved by using the wind propulsion unit. Therefore, the crew member can easily identify the effect of suppressing the energy consumption by using the wind propulsion unit by viewing the information visualized on the display device, and thus the environmental awareness of the crew member can be enhanced. From the above, the status on board the ship can be easily identified.

The display device may visualize an amount of energy saved by performing turning using the moment acting on the hull compared to a case where steering is performed, based on thrust generated by the wind propulsion unit. In this case, it is possible to easily identify to what extent the effect of suppressing the energy consumption can be obtained by performing turning using the moment generated by the wind propulsion unit, compared to a case of performing turning by backing the helm.

A ship according to still another aspect of the present invention includes the above-described display device.

With the ship, it is possible to obtain the same operations and effects as those of the above-described display device.

According to the present invention, it is possible to provide the display device capable of easily identifying the status on board the ship, and the ship.

### BRIEF DESCRIPTION OF THE DRAWINGS

FIG. 1 is a schematic cross-sectional view showing an example of a ship according to an embodiment of the present invention.
FIG. 2A is a diagram showing a principle of a rotor sail, and FIG. 2B is a plan view of the ship.
FIG. 3 is a schematic side view of a structure on a stern side of the ship.
FIG. 4 is a conceptual diagram showing a mechanism related to energy exchange of a hull in a control system of the ship.
FIG. 5 is another conceptual diagram showing the mechanism related to the energy exchange of the hull in the control system of the ship.
FIG. 6 is a block diagram showing a system configuration of the control system.
FIG. 7 is a diagram of display contents showing a model showing an operation status of the ship.
FIG. 8 is a diagram of display contents showing the model showing the operation status of the ship.
FIG. 9 is a diagram of display contents showing the model showing the operation status of the ship.
FIG. 10 is a diagram of display contents showing the model showing the operation status of the ship.
FIG. 11 is a diagram of display contents showing the model showing the operation status of the ship.
FIG. 12 is an example of an image in which a display device visualizes an operation status of the hull relative to environmental information.
FIG. 13 is an example of the image in which the display device visualizes the operation status of the hull relative to the environmental information.
FIG. 14 is an example of an image in which the display device visualizes a utilization ratio between engine propulsion using a propulsion device and wind propulsion using a wind propulsion unit in real time.
FIG. 15 is an example of an image in which the display device visualizes the utilization ratio between the engine propulsion using the propulsion device and the wind propulsion using the wind propulsion unit in real time.
FIGS. 16A and 16B are examples of an image in which the display device visualizes a charge level of a battery.
FIGS. 17A and 17B are examples of an image in which the display device visualizes power balance in the ship.
FIGS. 18A and 18B are examples of the image in which the display device visualizes the power balance in the ship.
FIGS. 19A and 19B are examples of the image in which the display device visualizes the power balance in the ship.
FIG. 20 is an example of an image in which the display device visualizes the power balance in the ship.
FIGS. 21A to 21C are examples of the image in which the display device visualizes the power balance in the ship.
FIG. 22 is an example of an image in which the display device visualizes a saving effect.
FIG. 23 is an example of the image in which the display device visualizes the saving effect.

### DETAILED DESCRIPTION OF THE INVENTION

Hereinafter, preferred embodiments of the present invention will be described with reference to the drawings. In the following description, the terms "front" and "rear" correspond to a bow-stern direction of a hull, the term "lateral" corresponds to a left-right (width) direction of the hull, and the terms "up" and "down" correspond to a vertical direction of the hull.

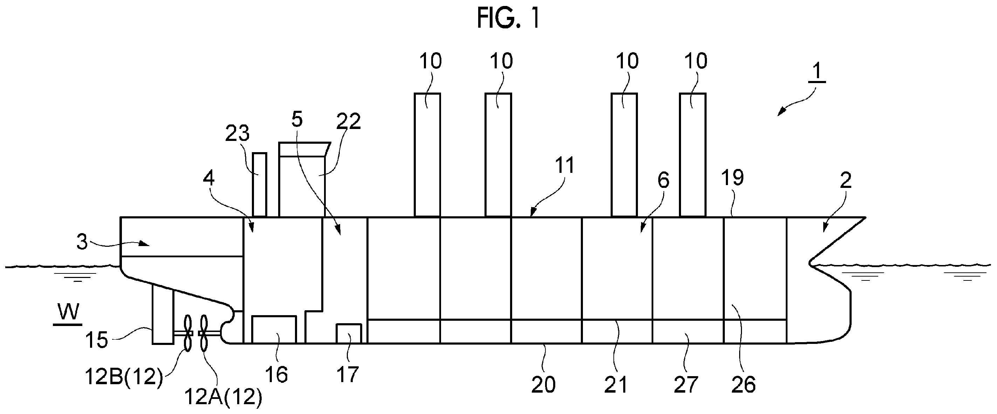

FIG. 1 is a schematic cross-sectional view showing an example of the ship according to the embodiment of the present invention. The ship 1 is a ship for transporting petroleum-based liquid cargo such as crude oil or liquefied gas, and is, for example, an oil tanker. The ship is not limited to an oil tanker, and may be, for example, a bulk carrier, a car carrier, or other various types of ships.

As shown in FIG. 1, the ship 1 includes a hull 11, a propulsion device 12, and a plurality of wind propulsion units 10. The hull 11 has a bow section 2, a stern section 3, an engine room 4, a pump room 5, and a cargo hold 6. An upper deck 19 is provided at an upper portion (or inside the ship) of the hull 11. The bow section 2 is located on a front side of the hull 11. The stern section 3 is located on a rear side of the hull 11.

The bow section 2 has, for example, a shape for reducing wave-making resistance in a fully loaded draft condition. The propulsion device 12 mechanically generates the thrust of the hull 11, and, for example, a propeller is used. The propulsion device 12 is installed below a waterline (water surface of sea W) at the stern section 3 during the propulsion. Further, an azimuth propulsion device 15 that also functions as a rudder for adjusting a propulsion direction is installed below the waterline at the stern section 3. In the example shown in FIG. 1, the ship 1 includes a plurality of propulsion devices 12A and 12B. The plurality of propulsion devices 12A and 12B are disposed to face each other in a front-rear direction.

The engine room 4 is provided at a position adjacent to the bow side of the stern section 3. The engine room 4 is a compartment for disposing a main engine 16 for applying a driving force to the propulsion device 12 (propulsion device 12A on the fore side). An accommodation quarter 22 and an exhaust funnel 23 are provided above the engine room 4 on the upper deck 19. A pump room 5 is provided at a position adjacent to the bow side of the engine room 4. The pump room 5 is a compartment in which a pump 17 or the like is disposed. The cargo hold 6 is provided between the bow section 2 and the pump room 5. The cargo hold 6 is a compartment for accommodating petroleum-based cargo. The cargo hold 6 is partitioned into a plurality of cargo oil tanks 26 and a plurality of ballast tanks 27 by adopting a double-hull structure including an outer shell plate 20 and an inner bottom plate 21. Petroleum-based cargo transported by the ship 1 is loaded in the cargo oil tank 26. The ballast tank 27 accommodates a predetermined amount of ballast water in accordance with a size of the vessel or the like.

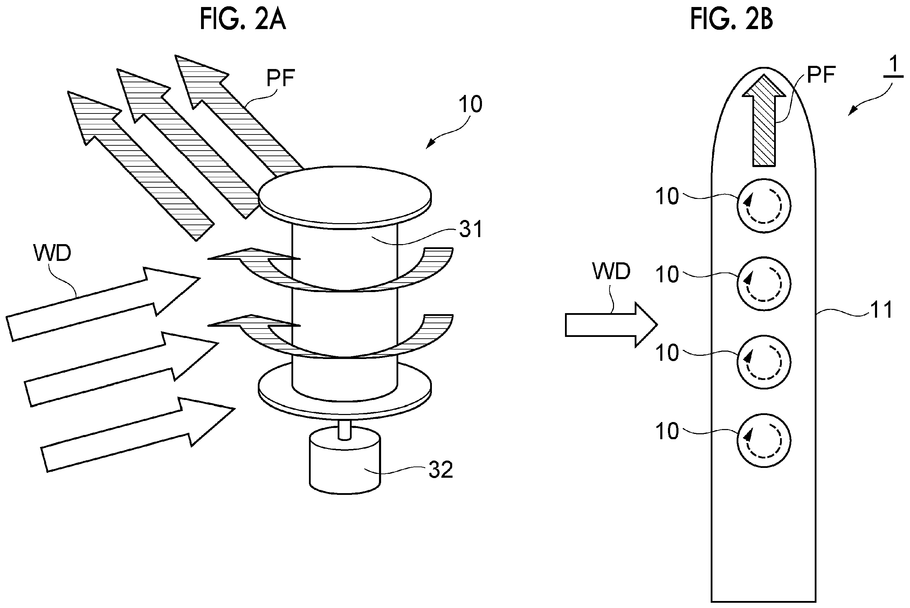

The wind propulsion unit 10 is a mechanism for propelling the hull 11 using wind power. In the present embodiment, a Magnus rotor type wind propulsion mechanism is adopted as the wind propulsion unit 10. A plurality of (here, four) wind propulsion units 10 are provided to be arranged in the front-rear direction on the upper deck 19 of the hull 11. As shown in FIG. 2A, the wind propulsion unit 10 includes a columnar rotor sail 31 extending in an up-down direction, and an electric motor 32 that rotates the rotor sail 31. When wind WD blows against the rotor sail 31 from the lateral side, a rotation direction of the rotor sail 31 and a direction of the wind WD are oriented in opposite directions on the aft side, and the rotation direction of the rotor sail 31 and the direction of the wind WD coincide with each other on the fore side. Accordingly, a pressure difference is generated between the fore side and the aft side of the rotor sail 31, and thus thrust PF toward the fore side is generated (Magnus effect). As shown in FIG. 2B, the wind WD blows against the hull 11 from the lateral side, and thus the hull 11 moves forward due to the thrust PF of each wind propulsion unit 10. As shown in FIG. 1, the rotor sail 31 that is the wind propulsion unit 10 may be provided on a wall section of the cargo hold 6. Accordingly, even when a structure having a large weight such as the rotor sail 31 is supported, the rotor sail 31 can be provided on the wall section of the cargo hold 6 to play a role as a reinforcing member that supports the rotor sail 31.

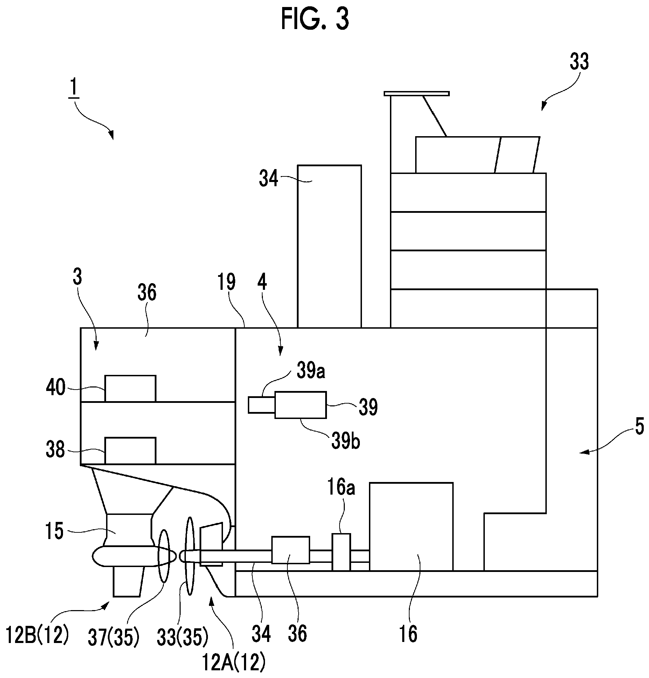

A structure on a stern side of the ship 1 will be described in detail with reference to FIG. 3. FIG. 3 is a schematic side view of the structure on the stern side of the ship **1.** The plurality of propulsion devices 12 of the ship 1 are configured by contra-rotating propellers 35. The propulsion device 12A on the fore side is provided with a fore propeller 33 that is attached to the hull 11 and that is driven by the main engine 16. The propulsion device 12A is connected to the main engine 16 in the engine room 4 via a shaft 34 extending forward from the front end portion. An electric motor 36 that recovers power from a rotation force of the shaft is provided at an intermediate position of the shaft 34. A clutch 16a is provided on the shaft 34 between the main engine 16 and the electric motor 36. The propulsion device 12B on the aft side is provided with a aft propeller 37 that is attached to the outside of the hull 11 to be capable of turning, that is disposed to face the fore propeller 33, and that is driven by an electric motor 38. The aft propeller 37 is attached to the azimuth propulsion device 15 that also functions as a rudder. As the propulsion device 12B on the aft side, an azimuth propulsion device to which the aft propeller 37 is attached to a pod that is rotatable 360° in the horizontal direction is adopted. The contra-rotating propellers 35 have the rotation direction of the fore propeller 33 and the rotation direction of the aft propeller 37 opposite to each other, recovers the rotational flow energy of the fore propeller 33 with the aft propeller 37 to rectify the recovered rotational flow energy into an axial flow, removes an energy loss due to the rotational flow, and leaves only the axial flow on the aft side, so that the energy efficiency can be improved. In addition, a diesel generator 39 is provided in the engine room 4. The generator 39 includes an electric motor 39a and an engine 39b. For example, a battery 40 is provided in the stern section 3.

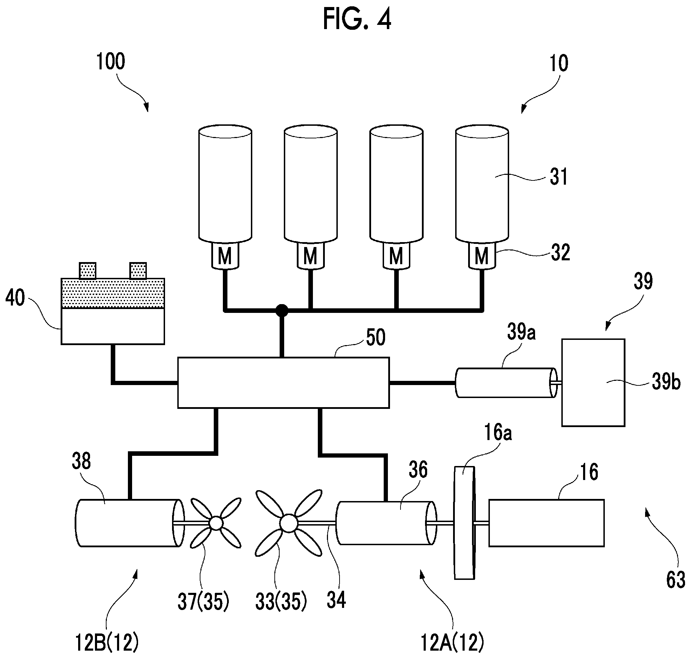

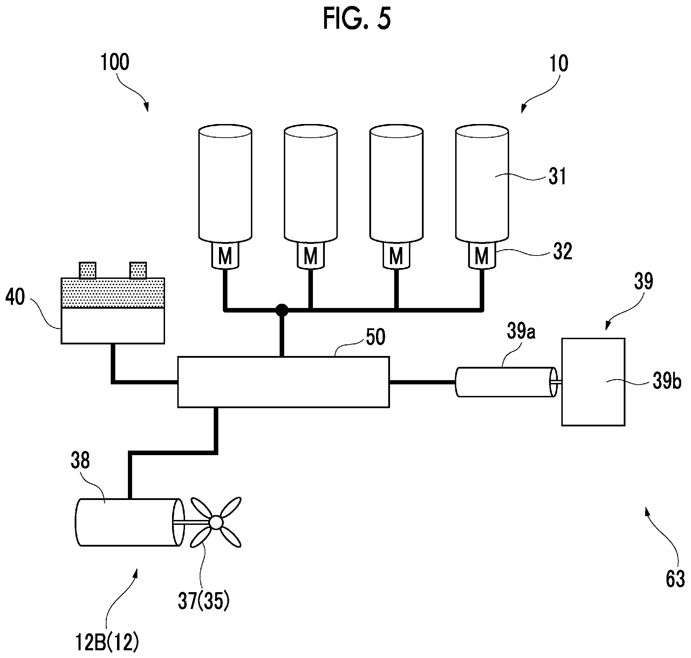

FIG. 4 is a conceptual diagram showing a mechanism related to the energy exchange of the hull 11 in a control system 100 of the ship 1. The control system 100 controls the wind propulsion unit 10 and the propulsion devices 12A and 12B in accordance with the obtained wind power status. In addition, the control system 100 may use the propulsion device 12 for regeneration when the wind propulsion unit 10 moves the hull 11. As shown in FIG. 4, the control system 100 includes the wind propulsion unit 10 (rotor sail 31 and electric motor 32), the propulsion device 12A (main engine 16, electric motor 36, fore propeller 33, and shaft 34) on the fore side, the propulsion device 12B (electric motor 38 and aft propeller 37) on the aft side, the generator 39, and the battery 40. Further, the control system 100 has a management system 50 that manages the energy of each of the above-described devices. The management system 50 is a system that exchanges or distributes the current in the control system 100. In addition, the control system 100 may have a configuration shown in FIG. 5. FIG. 5 shows a configuration in which the propulsion device 12 includes only the propulsion device 12B on the aft side, and the propulsion device 12A on the fore side is omitted.

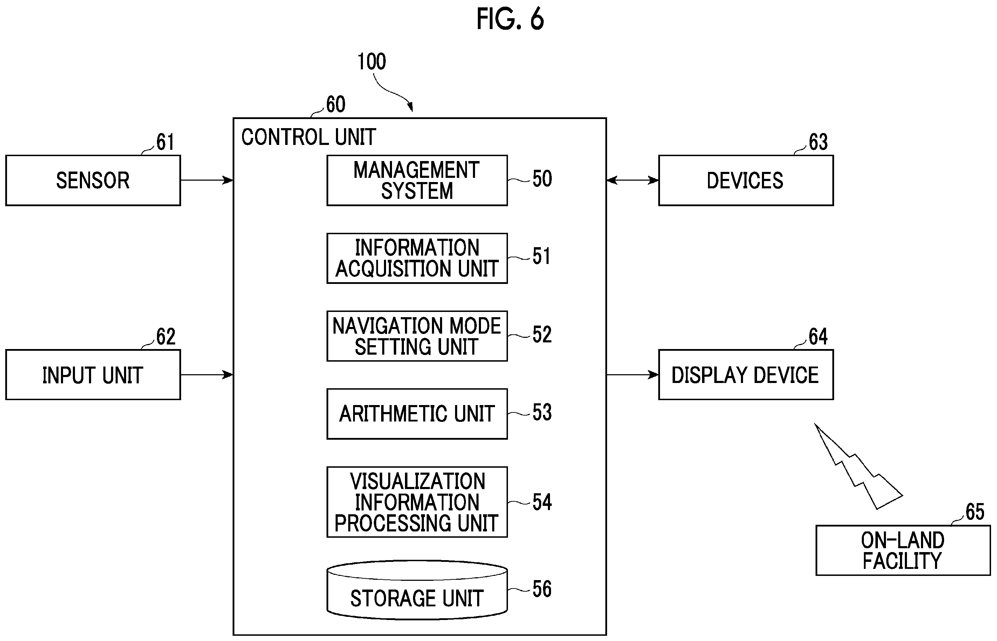

A system configuration of the control system 100 will be described in more detail with reference to FIG. 6. FIG. 6 is a block diagram showing the system configuration of the control system 100. As shown in FIG. 6, the ship 1 includes a control unit 60. The control unit 60 is configured by, for example, a computer system. For example, the computer system includes a processor (arithmetic circuit), a memory, a communication interface, and a data storage unit. The memory includes, for example, a read-only memory (ROM) and a random-access memory (RAM). The data storage unit includes, for example, a hard disk drive (HDD) or a solid-state drive (SSD). The control unit 60 may be configured by, for example, a microcontroller or an integrated circuit.

The control unit 60 performs various computation processes by, for example, executing a program stored in the memory on a CPU. With this process, the control unit 60 includes the functional elements shown in FIG. 6. That is, the control unit 60 includes the management system 50, an information acquisition unit 51, a navigation mode setting unit 52, an arithmetic unit 53, a visualization information processing unit 54, and a storage unit 56. The control unit 60 detects detection information from a sensor 61. The sensor 61 detects various types of information including the environmental information. The sensor 61 detects, for example, at least a wind direction and a wind speed of the wind WD (see FIG. 2B). In addition, the sensor 61 detects sea conditions. In addition, the sensor 61 detects position information, a bow direction, a rotation speed of the fore propeller 33 or the aft propeller 37, a rudder angle of the azimuth propulsion device 15, a rotation speed of the rotor sail 31, a hull tilt, a turning angular velocity, or the like. The control unit 60 acquires an input signal from an input unit 62. The input unit 62 is a device with which a user inputs various types of information. A mouse, a keyboard, a touch panel, or the like is adopted as the input unit 62.

The control unit 60 outputs signals to devices 63 and receives signals from the devices 63. In addition, the management system 50 of the control unit 60 controls the power exchange between the devices 63. The devices 63 include the wind propulsion unit 10, the propulsion device 12, the generator 39, and the battery 40. The control unit 60 outputs a signal including display contents to the display device 64. The display device 64 is a monitor. The display device 64 may be provided in an indoor space of the ship 1, or may be a monitor of a portable terminal of the crew member. In a case where the touch panel is adopted as the display device 64, the input unit 62 is incorporated in the display device 64.

The information acquisition unit 51 of the control unit 60 acquires various types of information for controlling the ship 1. The information acquisition unit 51 acquires the detection information detected by the sensor 61. In addition, the information acquisition unit 51 may acquire information obtained via communication means other than the sensor 61. The navigation mode setting unit 52 sets a navigation mode of the ship 1. The navigation mode will be described below. The arithmetic unit 53 calculates various types of information. The arithmetic unit 53 calculates control contents for controlling the operations of the devices 63, based on the set navigation mode. In addition, the arithmetic unit 53 calculates various types of information indicating the operation status of the ship 1 or a status of each of the devices 63. For example, the arithmetic unit 53 calculates thrust information or power information related to the wind propulsion unit 10 or the propulsion device 12 among the display contents of the display device 64. The visualization information processing unit 54 performs image processing on visualization information visualized by the display device 64. That is, the visualization information processing unit 54 generates an image shown in each drawing showing the image of the display device 64 described below.

The display device 64 may transmit visual information to be displayed, to an on-land facility 65 on the land. Accordingly, the display device 64 can share the visual information with the land. A mechanism that communicates with the on-land facility 65 may be provided inside the display device 64, or may be provided in the control unit 60. In a case where a communication unit is provided in the control unit 60, the communication unit is included in the "display device" in the claims.

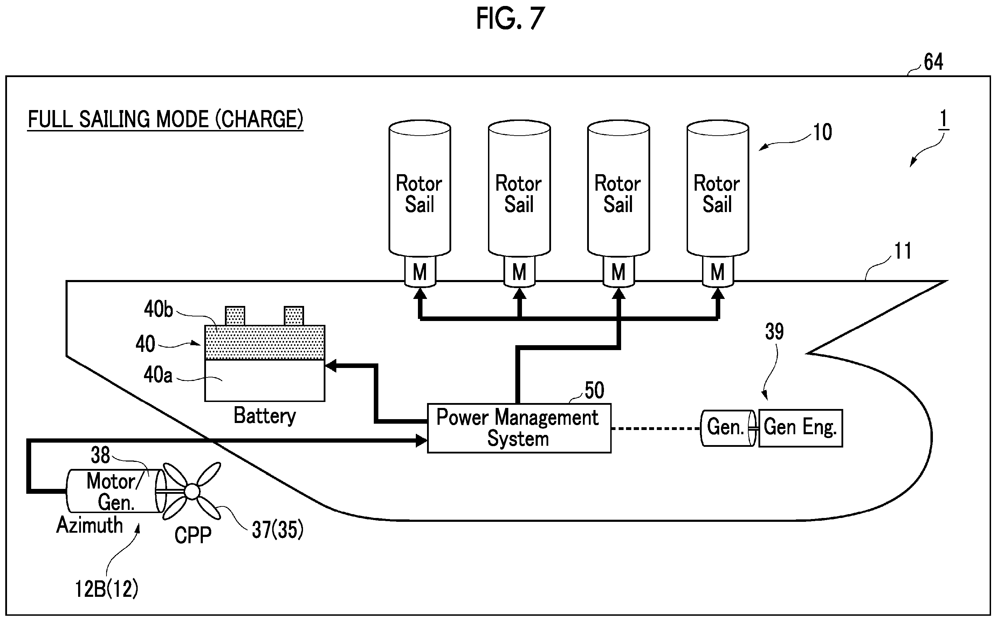

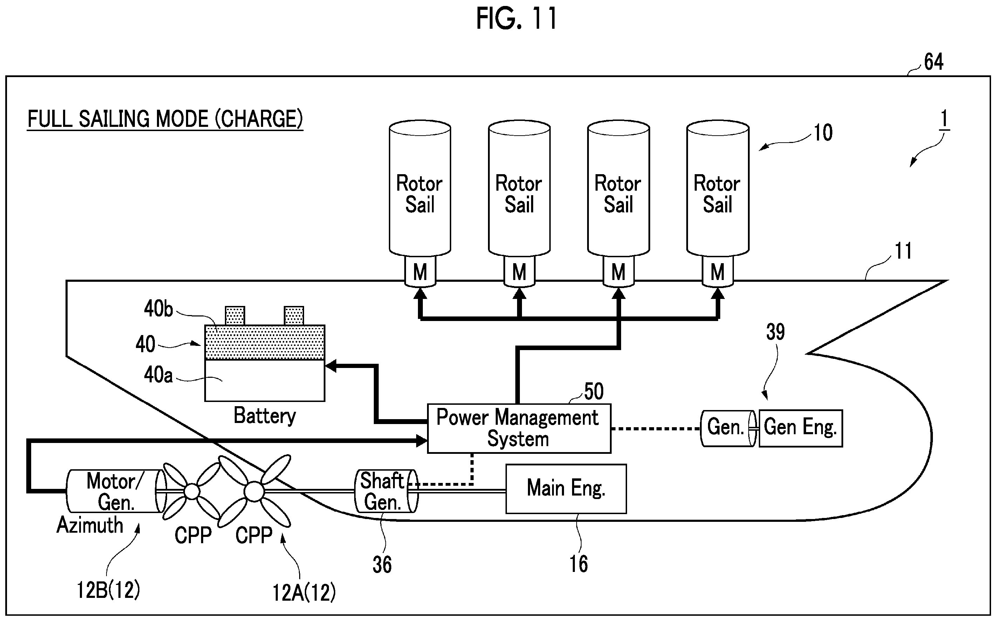

Here, the navigation mode will be described with reference to FIGS. 7 to 11. The control system 100 includes, as the navigation modes of the ship 1, at least an engine-driven mode in which the ship 1 is propelled only by the propulsion device 12, an engine-sailing mode in which the ship 1 is propelled by the propulsion device 12 and the wind propulsion unit 10, and a sailing mode in which the ship 1 is propelled only by the wind propulsion unit 10. FIGS. 7 to 10 show a navigation mode in a case where the ship 1 includes the devices 63 shown in FIG. 5. FIG. 11 shows a navigation mode in a case where the ship 1 includes the devices 63 shown in FIG. 4. In FIGS. 7 to 11, a line on which power supply is performed is indicated by a solid line arrow, and a line on which power exchange is not performed is indicated by a dashed line.

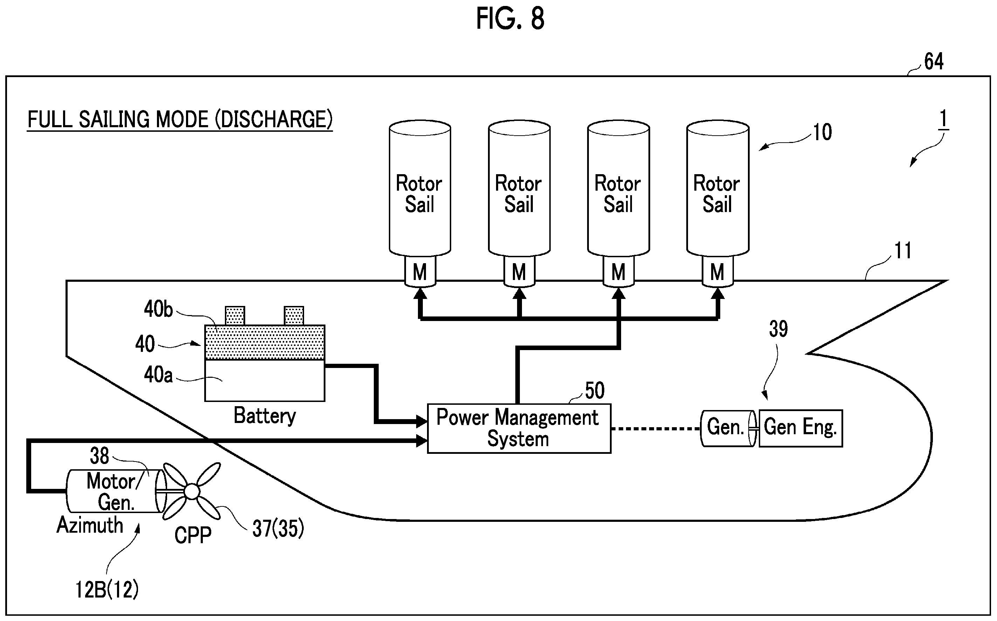

FIG. 7 shows an operation of the ship 1 when a full sailing mode is set as the navigation mode, and the battery 40 is charged. As shown in FIG. 7, in the sailing mode, the control system 100 performs control of stopping the generator 39, operating the wind propulsion unit 10, and generating power with the propulsion device 12B on the aft side. The aft propeller of the propulsion device 12B freewheels in the water by receiving the water current that accompanies sailing. Accordingly, the electric motor 38 generates the power and supplies the power to the management system 50. The management system 50 supplies the power from the propulsion device 12A to the wind propulsion unit 10. In addition, the management system 50 supplies the power to the battery 40 to charge the battery 40. Accordingly, the ship 1 is propelled only by the wind propulsion unit 10. FIG. 8 shows an operation of the management system 50 when the full sailing mode is set as the navigation mode, and the battery 40 is discharged. As shown in FIG. 8, the control system 100 performs control of discharging the battery 40 and supplying the power to the management system 50. The management system 50 supplies the power from the battery 40 to the wind propulsion unit 10 in addition to the power from the electric motor 38. Accordingly, the ship 1 is propelled only by the wind propulsion unit 10.

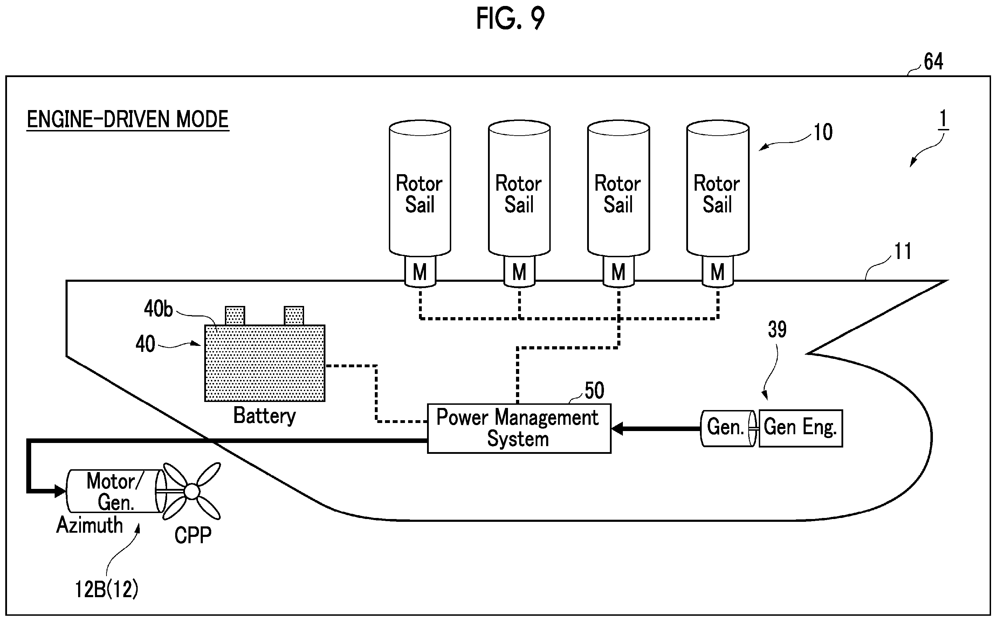

FIG. 9 shows an operation of the ship 1 when the engine-driven mode is set as the navigation mode. As shown in FIG. 9, in the engine-driven mode, the control system 100 performs control of operating the generator 39, operating the propulsion device 12B, and stopping the wind propulsion unit 10. The power generated by the generator 39 is supplied to the management system 50. The management system 50 supplies the power from the generator 39 to the propulsion device 12B. Accordingly, the ship 1 is propelled only by the propulsion device 12B.

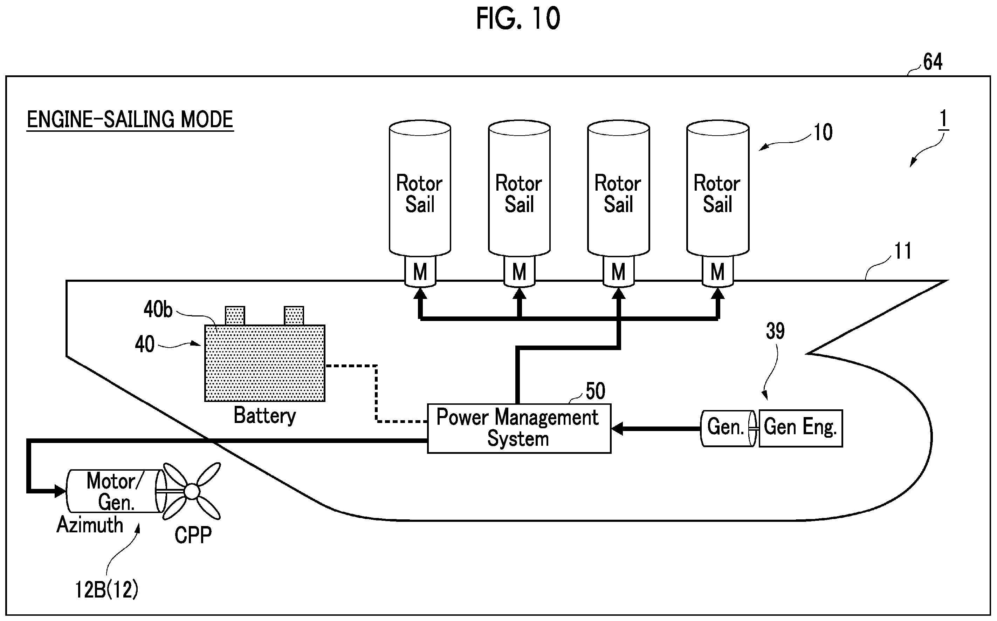

FIG. 10 shows an operation of the ship 1 when the engine-sailing mode is set as the navigation mode. As shown in FIG. 10, in the engine-sailing mode, the control system 100 performs control of operating the generator 39, operating the propulsion device 12B, and operating the wind propulsion unit 10. The power generated by the generator 39 is supplied to the management system 50. The management system 50 supplies the power from the generator 39 to the propulsion device 12B and the wind propulsion unit 10. Accordingly, the ship 1 is propelled by the propulsion device 12B and the wind propulsion unit 10.

FIG. 11 shows an operation of the ship 1 when the ship 1 including the contra-rotating propellers (see FIG. 4) is set to the full sailing mode, and the battery 40 is charged. As shown in FIG. 11, in the sailing mode, the control system 100 performs control of stopping the generator 39, operating the wind propulsion unit 10, stopping the propulsion device 12A on the fore side, and generating the power with the propulsion device 12B on the aft side. The propulsion device 12B generates the power and supplies the power to the management system 50. The management system 50 supplies the power from the propulsion device 12A to the wind propulsion unit 10. In addition, the management system 50 supplies the power to the battery 40 to charge the battery 40. Accordingly, the ship 1 is propelled only by the wind propulsion unit 10. In addition, the ship 1 including the contra-rotating propellers may also operate the propulsion device 12A on the fore side in the engine-driven mode and the engine-sailing mode. In this case, the management system 50 may use the power from the propulsion device 12A on the fore side instead of the generator 39.

Hereinafter, the display device 64 according to the present embodiment will be described in detail. The display device 64 is a device that displays various types of information related to the ship 1 provided with the wind propulsion unit 10 on the hull 11. The display device 64 displays various types of information for supporting the navigation of the ship **1.** In addition, among the following image examples displayed by the display device 64, the arithmetic unit 53 performs calculation on items requiring calculation for display, and the visualization information processing unit 54 performs image processing for displaying the image.

As shown in FIGS. 7 to 11, the display device 64 may visualize the navigation mode that is being set and display a model diagram of the ship 1 in which the operation status of each of the devices 63 of the ship 1 is visualized, based on the navigation mode. In the examples shown in FIGS. 7 to 11, the display device 64 displays the names of the devices 63 in English or English abbreviations. However, the language of the text information displayed by the display device 64 is not particularly limited, and may be changed as appropriate to Japanese, other foreign languages, or the like. The same applies to the subsequent drawings. The display device 64 displays the status of the main engine 16 (during operation, on standby, during warm-up, or the like), the status of the wind propulsion unit 10, the status of the generator 39, the status of the propulsion device 12, and the status of the battery 40.

The display device 64 visualizes the operation status of the hull 11 relative to the environmental information. The display device 64 may visualize the force or the moment acting on the hull 11, based on the force (such as thrust and lateral force) generated by the wind propulsion unit 10. The environmental information is information related to the environment of the navigation of the ship 1 that may affect the navigation of the ship 1, and examples thereof include wind conditions (wind direction, wind speed, and fluctuation status of wind), sea conditions (wave height, wave direction, and period), weather, an operation of another ship, a tidal current, and a water depth. The operation status of the hull 11 indicates a status related to the operation of the hull 11 when the ship 1 is sailing, and includes various types of information such as a ship speed during the navigation, a propulsion direction, the thrust or resistance generated by the propulsion device 12, the thrust generated by the wind propulsion unit 10, a turning moment generated by the rudder, a turning moment generated by the wind propulsion unit 10, a bow direction, and a yaw angle. The display device 64 may display the status of the propeller (rotation speed, pitch angle, thrust, horsepower, or the like) or the rudder angle.

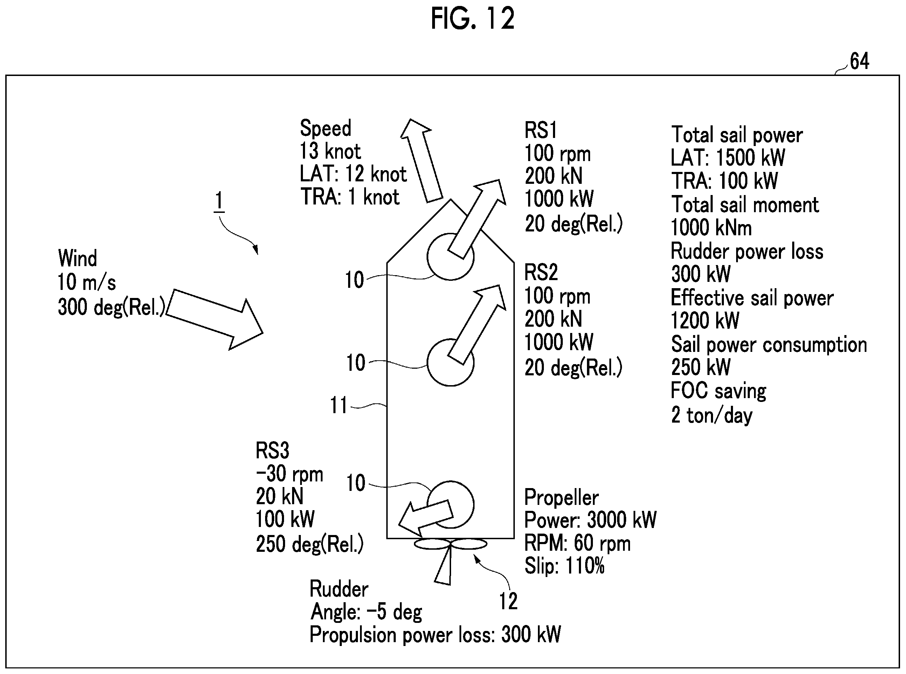

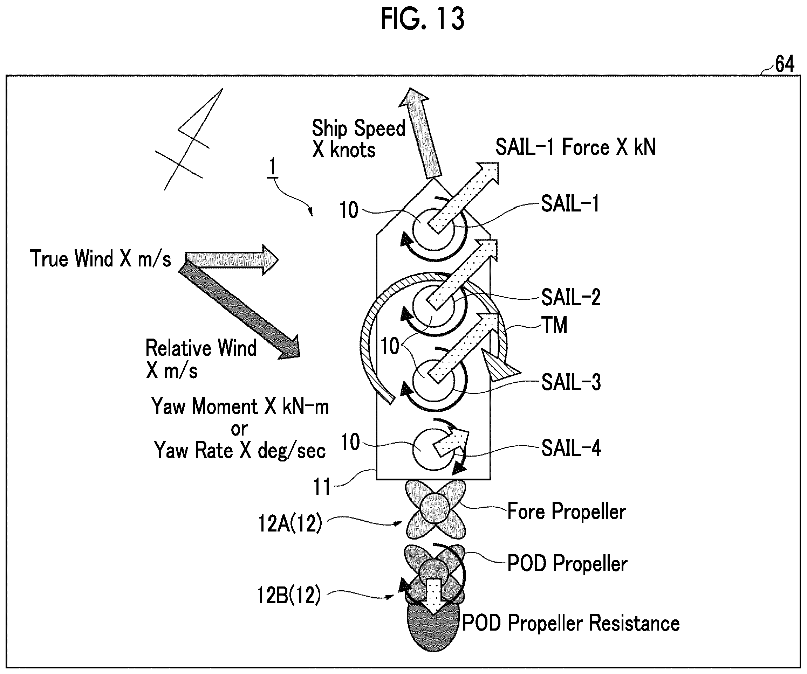

FIGS. 12 and 13 show examples of images in which the display device 64 visualizes the operation status of the hull 11 relative to the environmental information. In FIG. 12, the wind direction with respect to the hull 11 is indicated by an arrow, and a direction of the thrust generated by each of the wind propulsion units 10 is indicated by an arrow. A length of the arrow indicates the magnitude of the thrust. A rudder direction of the propulsion device 12 is shown as an illustration. In addition, a traveling direction of the hull 11 is indicated by an arrow. In addition, various types of information are shown as the text information.

In FIG. 13, the wind direction with respect to the hull 11 is indicated by an arrow, and a direction of the thrust generated by each of the wind propulsion units 10 is indicated by an arrow. A length of the arrow indicates the magnitude of the thrust. The rotation direction and the rotation speed of each of the wind propulsion units 10 are indicated by the direction of the arrow and the length of the arrow. The rotation directions and the rotation speeds of the propellers of the propulsion devices 12A and 12B are indicated by the direction of the arrow and the length of the arrow. The thrust generated by each of the propulsion devices 12A and 12B is indicated by an arrow. In addition, the traveling direction of the hull 11 is indicated by an arrow. The direction and the magnitude of the moment generated by each of the wind propulsion units 10 and the turning moment TM generated in the hull 11 by the actions of the propulsion devices 12A and 12B are shown by the direction of the arrow and the length of the arrow. The rotation directions and the speeds or the magnitudes of the wind propulsion unit 10, the propellers of the propulsion devices 12A and 12B, the turning moment TM may be displayed by animation. Although the thrust of the wind propulsion unit 10 is shown as a resultant force, the thrust may be decomposed and shown in the bow direction and the width direction. In FIGS. 12 and 13, the hull 11 is displayed in a "hull fixed coordinate system" in which the hull 11 always faces upward, but may be displayed in a "ground coordinate system" in which the up direction is always a designated direction (east, west, south, or north).

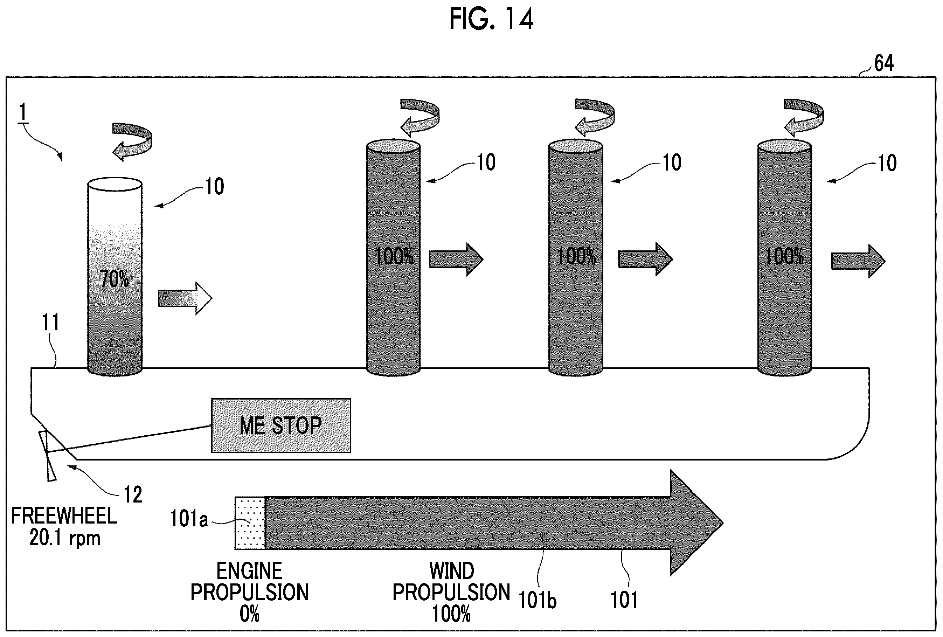

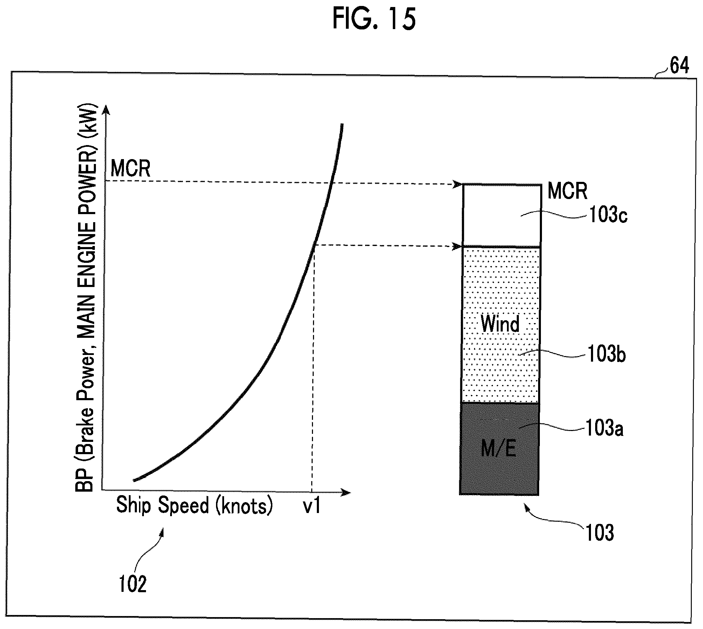

The display device 64 may visualize a utilization ratio between the engine propulsion using the propulsion device 12 and the wind propulsion using the wind propulsion unit 10 in real time. FIGS. 14 and 15 show examples of images in which the information is visualized. In FIG. 14, the display device 64 visualizes the status of the force (thrust, lateral force, or the like) generated by the wind propulsion unit 10. The display device 64 displays an illustration of each of the wind propulsion units 10 provided in the hull 11, and indicates the wind power generated by each of the wind propulsion units 10 in %. The maximum thrust that can be generated by the wind propulsion unit 10 is set to 100%. The display device 64 displays a ratio of the thrust generated by each of the wind propulsion units 10 with a color gradient. In addition, the display device 64 displays the thrust of the propulsion device 12 as the text information when the propulsion device 12 generates the thrust. In the example shown in FIG. 14, since the propulsion device 12 freewheels, the display device 64 displays the rotation speed. The display device 64 shows the total thrust of the entire hull 11 with an arrow 101, shows a ratio of engine thrust in the total thrust in a region 101a, and shows a ratio of wind thrust in the total thrust in a region 101b.

In FIG. 15, the display device 64 visualizes a relationship between the ship speed of the ship 1 and a required output, and visualizes the status of involvement of the output of the wind propulsion unit 10 in the required output. The display device 64 displays a graph showing a relationship between the ship speed and the required output for obtaining the ship speed, on the display unit 102. Here, "MCR" is the maximum output of the ship 1. The graph on the display unit 102 may be omitted. The display device 64 displays the ratio of the output of the engine propulsion and the ratio of the output of the wind propulsion at a certain ship speed (ship speed v1) on the display unit 103. A region 103a indicates the output due to the engine thrust provided by the propulsion device 12. The region 103a may be calculated from a shaft-horsepower meter or from fuel consumption. A region 103b indicates the output by wind propulsion provided by the wind propulsion unit 10. The region 103b may be calculated by subtracting the output of the propulsion device 12 from the required output, or may be calculated from the thrust of each of the wind propulsion units 10. A region 103c indicates marginal output up to the maximum output (MCR). The lengths of the respective regions 103a, 103b, and 103c vary depending on the ratio of the regions 103a, 103b, and 103c to the whole. The sum of the region 103a and the region 103b is the required output at the ship speed v1. The required output can be predicted from a horsepower curve (including the performance in calm water or in an actual sea area) or actual operation data, or can be calculated by adding the output of the propulsion device 12 to the output of the wind propulsion unit 10.

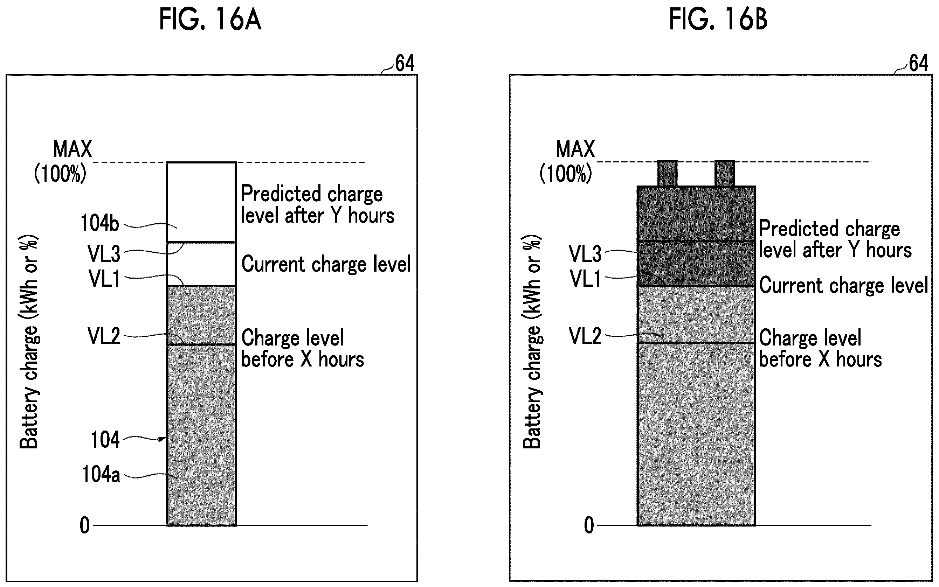

The display device 64 may visualize a charge level of the battery 40. FIGS. 16A and 16B are examples of an image in which the charge level of the battery 40 is visualized. In FIG. 16A, the display device 64 displays a bar graph 104 indicating the charge level of the battery 40. A length of the entire bar graph 104 indicates the maximum charge level (100%) of the battery 40. A colored region 104a of the bar graph 104 indicates the charge level, and a white region 104b indicates a remaining capacity of the battery 40. In addition, a line VL1 at a boundary between the region 104a and the region 104b indicates a current charge level. The display device 64 indicates a charge level X hours ago on a line VL2, and indicates a charge level Y hours later on a line VL3. In this manner, the user can check that the charging is in progress during the charging, and can identify a remaining time until the battery runs out during the use. The display device 64 may display a remaining time until the charge level becomes zero or a remaining time until the charging is completed. The battery 40 of the ship 1 is not charged in a short time like a portable terminal, but requires a long time for charging, and thus it is beneficial for the user to identify the charge level after several hours. In addition, as shown in FIG. 16B, the display device 64 may display the bar graph 104 as an illustration of the battery. The respective lines VL1, VL2, and VL3 are the same as those in FIG. 16A.

In addition, the display device 64 may visualize the charge level of the battery 40 in the image of the model diagram of the ship 1 in FIGS. 7 to 11. The display device 64 displays a region 40a indicating the charge level and a region 40b indicating the remaining capacity in the illustration of the battery 40. In the examples of FIGS. 9 and 10 in which the battery 40 is not used, the battery 40 runs out, and the entire region is the region 40b.

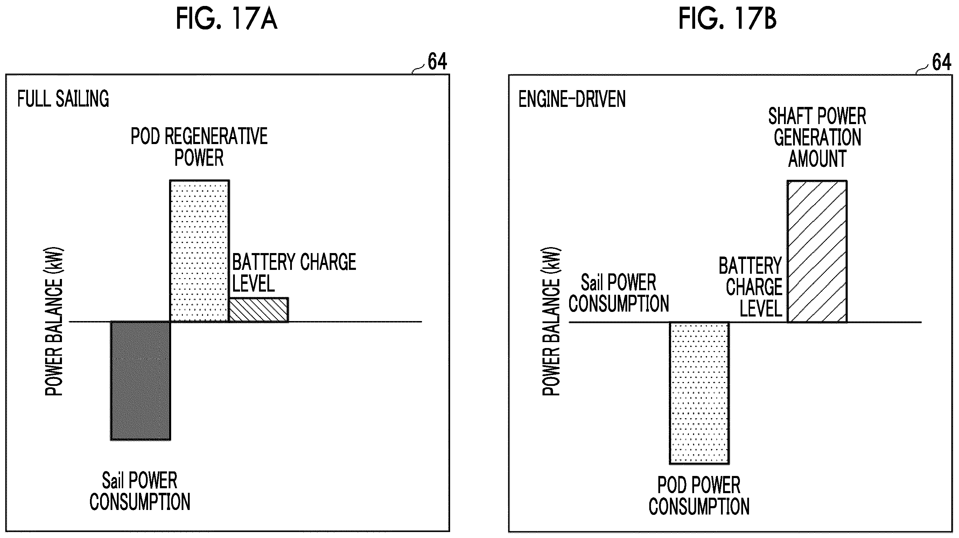

The display device 64 may visualize power balance in the ship 1. The power balance indicates a relationship between the power consumed inside the ship 1 and the power supplied to the device that consumes the power, or indicates a relationship between the power consumed inside the ship 1 and the power obtained by regeneration. FIGS. 17A to 21C show examples of images in which the display device 64 visualizes the power balance in the ship 1. In addition, the "Sail power consumption" among the items shown in FIGS. 17A to 21C is a power consumed by the operation of the wind propulsion unit 10. The "POD regenerative power" is an amount of regenerative power generated by the propulsion device 12. The "POD power consumption" is an amount of power consumed by the propulsion device 12. The "battery charge level" is a charge level of power charged to the battery 40. The "battery discharge level" is a discharge level of power discharged from the battery 40. The "shaft power generation amount" is an amount of power generated by the generator 39. The "steering power consumption" is a power consumed by steering the rudder of the propulsion device 12. In FIGS. 17A, 17B, 18A, 18B, and 21A to 21C, a graph extending upward indicates the power generated in the ship 1 and the power charged and discharged by the battery 40, and a graph extending downward indicates the power consumed in the ship 1.

In FIG. 17A, the display device 64 visualizes the power balance in the ship 1 in the full sailing mode. The propulsion device 12 generates the power, charges the battery 40 with a part of the generated power, and consumes the power of the wind propulsion unit 10. The amount of power obtained by subtracting the charge level of the battery 40 from the amount of regenerative power by the propulsion device 12 balances with the amount of power consumed by the wind propulsion unit 10. In FIG. 17B, the display device 64 visualizes the power balance in the ship 1 in the engine-driven mode. The generator 39 generates the power, and the propulsion device 12 consumes the generated power. The amount of power generated by the generator 39 and the amount of power consumed by the propulsion device 12 are balanced with each other.

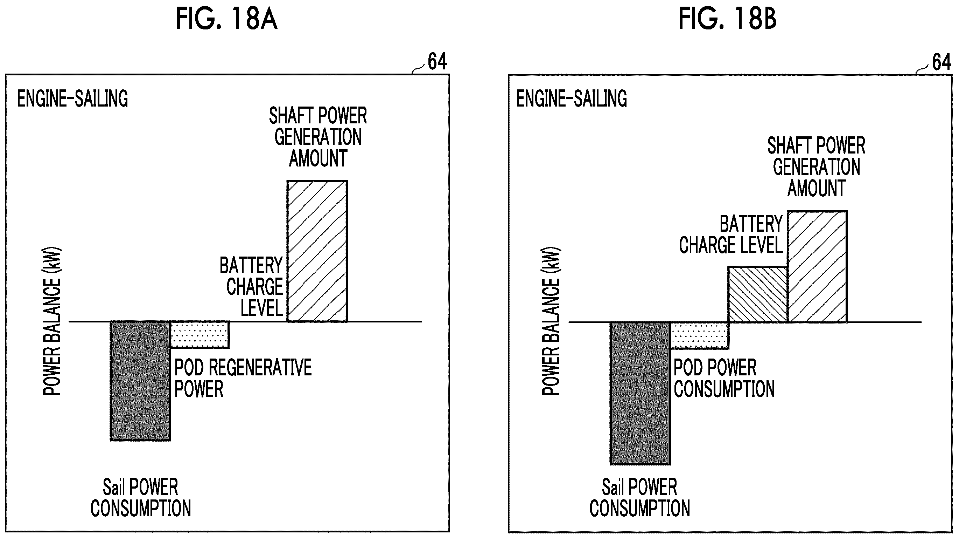

In FIG. 18A, the display device 64 visualizes the power balance in the ship 1 in the engine-sailing mode. The generator 39 generates the power, and the wind propulsion unit 10 and the propulsion device 12 consume the generated power. The amount of power generated by the generator 39 and the amount of power consumed by the wind propulsion unit 10 and the propulsion device 12 are balanced with each other. In FIG. 18B, the display device 64 visualizes the power balance in the ship 1 in the engine-sailing mode. The generator 39 generates the power, the battery 40 discharges the power, and the wind propulsion unit 10 and the propulsion device 12 consume the generated power. The discharge level of the battery 40 and the amount of power generated by the generator 39 are balanced with the amount of power consumed by the wind power generation system 1 in the wind propulsion unit 10 and the propulsion device 12. In addition, a saving amount per unit time can be calculated by subtracting the amount of power generated by the generator 39 in FIG. 18A from the amount of power generated the generator 39 in FIG. 17B. The saving amount is the amount of fossil fuel that need not be consumed by using the wind propulsion unit 10. The saving amount may be indicated by a fuel amount or fuel cost. When the saving amount in the engine-sailing mode is calculated, a predicted value of the power generation amount required when the ship speed in such a case is achieved in the engine-driven mode need only be used. An integrated value may be graphed by integrating the saving amount over time. In this case, for example, an integrated value of the saving amount from the departure, and an integrated value of the saving amount per day may be calculated.

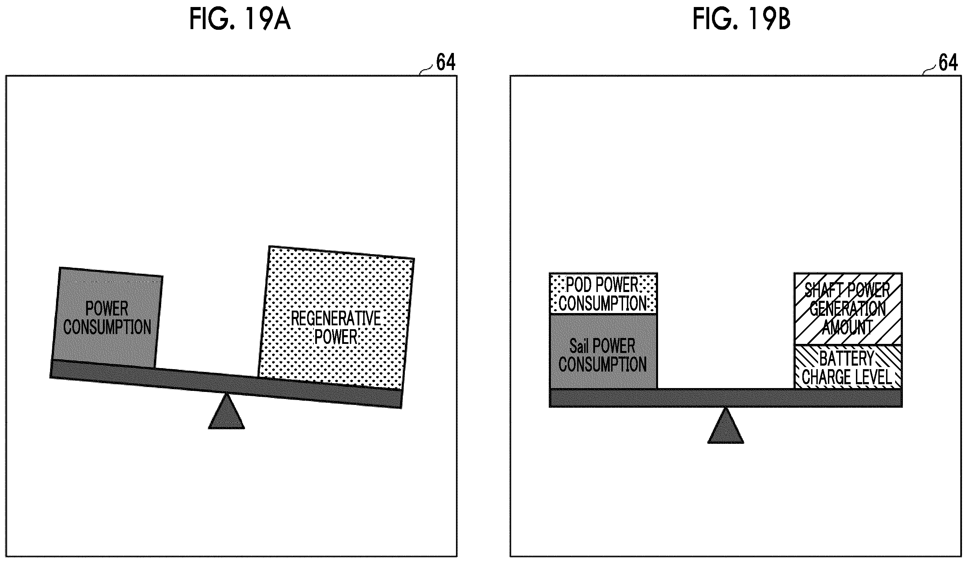

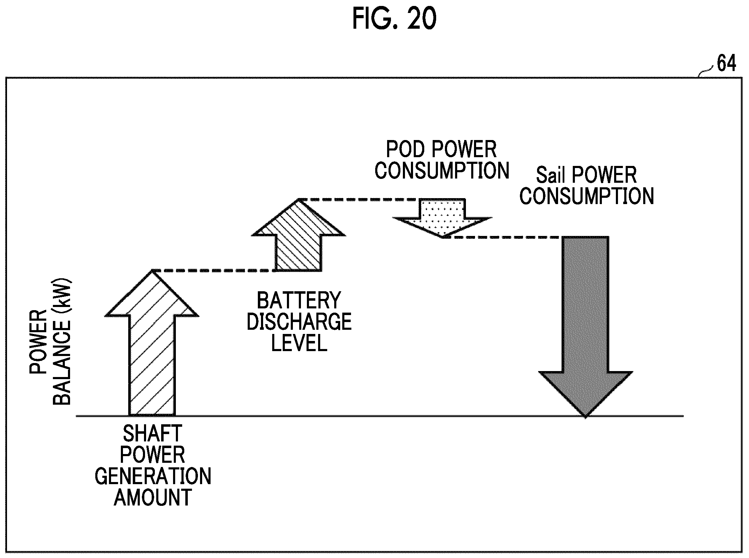

The display device 64 may visualize the status of FIG. 17A as in FIG. 19A. In FIG. 19A, the display device 64 displays the amount of power consumption and the amount of regenerative power on a balance, and displays the larger amount to be inclined. In FIG. 19A, since the amount of regenerative power is larger, a surplus power is generated, and it can be seen that the battery 40 can be charged with the surplus power. In addition, the display device 64 may visualize the status in FIG. 18B as in FIG. 19B. In FIG. 19B, the display device 64 shows the amount of power consumption and the amount of power supply (power generation amount and power discharge level) on a balance. Accordingly, the equation or the inequality can be visualized. In addition, by accurately reflecting an area of each item, it is possible to visually understand which item is dominant. In addition, the display device 64 may visualize the status in FIG. 18B in a waterfall chart as shown in FIG. 20. In this manner, it is possible to visually understand whether the energy balance is in equilibrium or is inclined to either plus or minus.

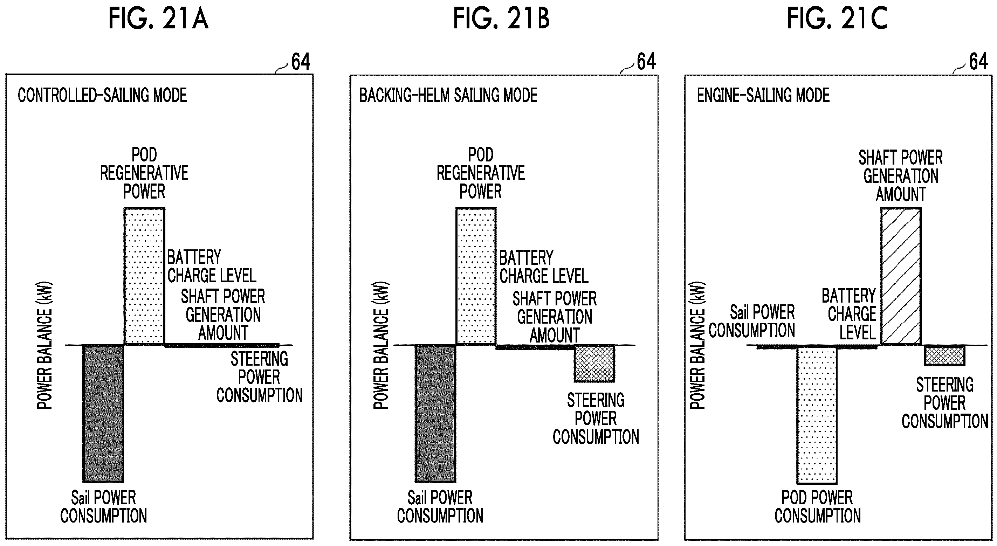

Here, when the traveling direction of the hull 11 is maintained in the sailing mode, the traveling direction can be controlled by the turning moment TM (see FIG. 13) acting on the entire hull 11 by controlling the rotation speed of each of the wind propulsion units 10 (referred to as a controlled-sailing mode). The power balance in this case is shown in FIG. 21A. As shown in FIG. 21A, it is possible to eliminate power consumed by backing the helm. Meanwhile, the traveling direction of the hull 11 can also be maintained by backing the helm in the sailing mode (referred to as a backing-helm sailing mode). The power balance in this case is shown in FIG. 21B. As shown in FIG. 21B, the power consumption occurs by backing the helm. FIG. 21C shows the power balance in a case where the same ship speed as that in FIGS. 21A and 21B is output in the engine-driven mode. The control system 100 can calculate the saving amount achieved by the sailing mode with respect to the engine-driven mode by comparing the power balance in FIG. 21A and the power balance in FIG. 21C. Specifically, a value obtained by subtracting the power amount or the fuel consumption with the fuel consumption in the controlled-sailing mode from the power amount or the fuel consumption with the fuel consumption in the engine-driven mode is the saving amount. In the controlled-sailing mode of FIG. 21A, the fuel consumption is zero in order to cover the energy for navigating the hull 11 with the regenerative power. The control system 100 can calculate the saving amount by controlling the moment of the wind propulsion unit 10 by comparing the power balance in FIG. 21A and the power balance in FIG. 21B. Specifically, a value obtained by subtracting the power amount or the fuel consumption with the fuel consumption in the controlled-sailing mode from the power amount or the fuel consumption accompanying the steering in the backing-helm sailing mode is the saving amount.

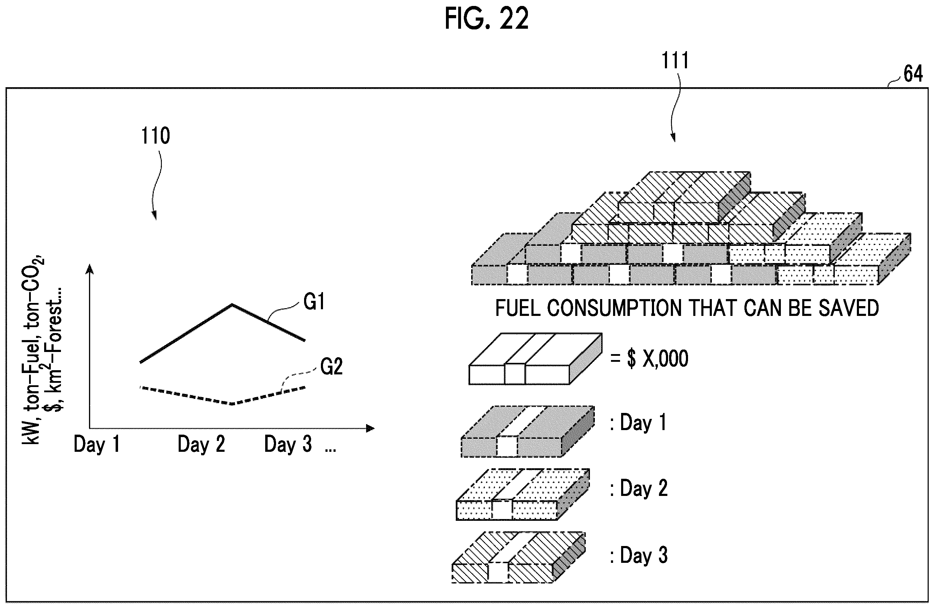

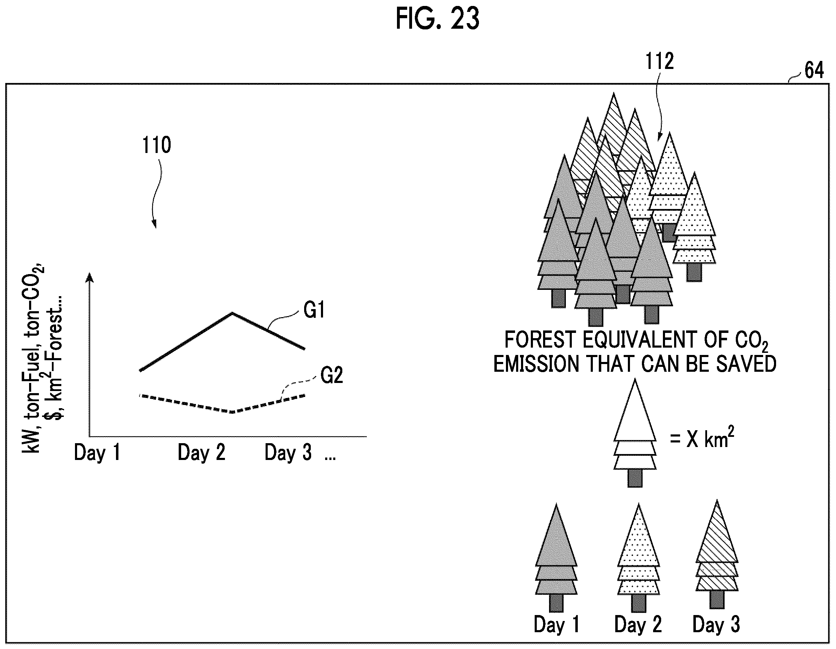

The display device 64 may visualize a fuel economy effect of the wind propulsion unit 10. The display device 64 can visualize the fuel economy effect of the wind propulsion unit 10 by using the calculation result of the above-described saving amount. The control system 100 can visualize the saving amount per hour or the saving amount from the departure to the current time by integrating the saving amount in time, in addition to the instantaneous value of the saving amount in real time. The saving amount may be indicated in the unit of "kW", or may be visualized as a fuel amount equivalent (ton), a fuel cost equivalent (dollar or yen), a CO₂ equivalent (ton), or a forest equivalent (km²). As shown in a display unit 110 of FIGS. 22 and 23, the display device 64 may visualize the fuel economy effect by a line graph. In the display unit 110, the saving amount due to the effect of the sailing (comparison between FIG. 21A and FIG. 21C) is shown by a graph G1, and the saving amount due to the effect of the moment control (comparison between FIG. 21A and FIG. 21B) is shown by a graph G2. Here, the saving amount per day is shown in the line graph. However, the type of the graph is not particularly limited, and a bar graph or the like may be used.

In addition, the expression method of the fuel economy effect is not limited to the graph, and may be visualized by the size or the number of petroleum barrels, the number of bundles of dollar bills, the size of the forest, or the number of trees. For example, as shown in a display unit 111 of FIG. 22, the display device 64 visualizes the fuel cost that can be saved by the saving effect by the accumulation of the bundle of dollar bills. Here, a display mode of the bundle of bills is changed every day, so that the saving effect on a daily basis can be easily checked. In addition, as shown in a display unit 112 of FIG. 23, the display device 64 visualizes a CO₂ emission amount that can be saved by the saving effect in the number of trees in the forest. Here, a display mode of the tree is changed every day, so that the saving effect on a daily basis can be easily checked. In this way, the saving amount is evaluated at a plurality of evaluation points, so that the environmental awareness of the crew member can be enhanced.

Next, the operations and effects of the display device 64 and the ship 1 according to the present embodiment will be described.

First, the related art will be described. In a case of a general ship propelled by a screw propeller, the thrust of the propeller acts in the front-rear direction, and the rudder acts in a direction in which the turning moment is generated. In contrast, the direction and the amount of the thrust generated by the wind propulsion unit (including a rotor sail and a kite) in a case of the wind propulsion depend on the wind direction, the wind speed, the traveling direction of the ship, and the ship speed. With the four components, a so-called relative wind direction (or an angle of attack when the sail is regarded as a wing) and a relative wind speed are determined. This is common to any type of wind propulsion unit (rigid sail, fabric sail, rotor sail, suction sail, or the like). Therefore, it is very difficult to understand the direction in which the wind propulsion unit generates the force and the magnitude of the generated force. Even when the saving effect achieved by the wind propulsion unit is quantitatively displayed, it is difficult to realize how much the saving effect is in the whole. Even when an experienced crew member is likely to be able to estimate the force of the wind propulsion unit approximately from information such as a wind speed meter and a GPS, the method is a know-how empirically acquired, and is not guaranteed in terms of accuracy.

In contrast, the display device 64 according to the present embodiment is the display device 64 that displays the information related to the ship 1 provided with the wind propulsion unit 10 on the hull 11, and visualizes the operation status of the hull 11 relative to the environmental information.

The display device 64 according to the present embodiment visualizes the operation status of the hull 11 relative to the environmental information. In a case where the environment such as the wind direction or the wind speed with respect to the ship 1 changes and the operation of each of the devices 63 including the wind propulsion unit 10 is adjusted accordingly, the display device 64 can visualize the operation status of the hull 11 accordingly. Therefore, the crew member can easily identify the operation status of the hull 11 by viewing the information visualized on the display device 64. From the above, the status on board the ship 1 can be easily identified.

The display device 64 may visualize the force or the moment acting on the hull 11 based on the force generated by the wind propulsion unit 10. In this case, the crew member can easily identify what kinds of force and moment are acting on the hull 11 by each wind propulsion unit 10, through the visual information.

The display device 64 may visualize the status of the force (thrust, lateral force, and the like) generated by the wind propulsion unit 10. In this case, the crew member can easily identify what kind of force is generated in each wind propulsion unit 10.

The display device 64 may visualize a relationship between the ship speed of the ship 1 and the required output, and visualize the status of involvement of the output of the wind propulsion unit 10 in the required output. In this manner, the crew member can easily identify how much the wind propulsion unit 10 contributes to the operation of the ship 1.

The display device 64 may visualize the charge level of the battery 40. Accordingly, the crew member can easily identify the charge level of the battery 40, and thus the charging and discharging of the battery 40 can be performed at an appropriate timing.

The ship 1 may include, as navigation modes of the ship 1, at least the engine-driven mode in which the ship 1 is propelled only by the propulsion device 12, the engine-sailing mode in which the ship 1 is propelled by both the propulsion device 12 and the wind propulsion unit 10, and the sailing mode in which the ship 1 is propelled only by the wind propulsion unit 10, and the display device 64 may visualize the navigation mode that is being set. In this case, the crew member can easily identify which navigation mode the ship 1 is currently operating in, among the plurality of navigation modes.

The display device 64 may visualize the power balance in the ship 1. Accordingly, the crew member can easily identify the power balance in the ship 1.

The display device 64 may visualize the fuel economy effect of the wind propulsion unit 10. In this manner, the crew member can easily identify the fuel economy effect achieved by the wind propulsion unit 10, and thus the environmental awareness of the crew member can be enhanced.

The display device 64 may share the visualization information with the land. Accordingly, a worker on land can easily identify the status on board the ship 1.

The display device 64 according to the present embodiment is the display device 64 that displays the information related to the ship 1 provided with the wind propulsion unit 10 on the hull 11, and the display device 64 visualizes the utilization ratio between the engine propulsion using the propulsion device 12 and the wind propulsion using the wind propulsion unit 10 in real time.

The display device 64 according to the present embodiment visualizes the utilization ratio between the engine propulsion using the propulsion device 12 and the wind propulsion using the wind propulsion unit 10 in real time. In this manner, the display device 64 can display the visualization information on how much the wind propulsion unit 10 contributes to the operation of the ship 1 in real time. Therefore, the crew member can easily identify the degree of contribution of the wind propulsion unit 10 at present by viewing the information visualized on the display device 64. From the above, the status on board the ship can be easily identified.

The display device 64 may visualize the force or the moment acting on the hull 11, based on the force (such as thrust and lateral force) generated by the wind propulsion unit 10. In this case, the crew member can easily identify how much the wind propulsion unit 10 contributes to the operation of the hull 11 in real time.

The display device 64 according to the present embodiment is the display device 64 that displays the information related to the ship 1 provided with the wind propulsion unit 10 on the hull 11, and the display device 64 visualizes the amount of energy saved by using the wind propulsion unit 10 compared to a case where the propulsion device 12 is used.

The display device 64 according to the present embodiment visualizes the amount of energy saved by using the wind propulsion unit 10 compared to a case where the propulsion device 12 is used. In this manner, the display device 64 can display the visualization information on how much the energy can be saved by using the wind propulsion unit 10. Therefore, the crew member can easily identify the effect of suppressing the energy consumption by using the wind propulsion unit 10 by viewing the information visualized on the display device 64, and thus the environmental awareness of the crew member can be enhanced. From the above, the status on board the ship 1 can be easily identified.

The display device 64 may visualize an amount of energy saved by performing turning using the moment acting on the hull 11 compared to a case where steering is performed, based on the thrust generated by the wind propulsion unit 10. In this case, it is possible to easily identify to what extent the effect of suppressing the energy consumption can be obtained by performing turning using the moment generated by the wind propulsion unit 10, compared to a case of performing turning by backing the helm.

The ship 1 according to the present embodiment includes the display device 64.

With the ship 1, it is possible to obtain the same operations and effects as those of the display device 64.

From the above, since the display device 64 visualizes the status of the thrust generated by the wind propulsion unit 10, even a general crew member who does not have experience in sailing can always identify the status of the wind propulsion unit 10, so that it is possible for the crew member to obtain benefits such as being able to perform steering like a normal ship, being able to consider an optimal route, and being able to quickly notice an abnormality. In addition, the crew member realizes the effect of the wind propulsion unit 10, and thus the environmental awareness of the crew member during the sailing is enhanced. The display device 64 can also be used during the engine-sailing using the wind propulsion unit 10 as an auxiliary force. By digitizing the thrust of the wind propulsion unit 10 and recording the digitized thrust, it is also possible to obtain a secondary effect such as calculation of the fuel saving amount as a real record of navigation, crew member education, optimization of sailing by AI learning, and verification of safety (black box role of an aircraft).

The display device 64 can play the following role for the purpose of allowing the crew member to switch between the sailing mode, the engine-sailing mode, and the engine-driven mode and to assist in the course determination. That is, the display device 64 can display the wind direction, the wind speed, the bow direction, the traveling direction, the ship speed, and the amount and the direction of the thrust generated by the wind propulsion unit 10 in (substantially) real time in the ship 1 that includes the wind propulsion unit 10 and is capable of the engine-sailing or the sailing (including both the engine-sailing and the sailing). In addition, the display device 64 can visualize the effect of the moment control (turning control by the turning moment TM in FIG. 13) by the wind propulsion unit 10. In addition, the display device 64 can visualize the thrust generated by the wind propulsion unit 10 or the fuel saving amount to allow the crew member to intuitively recognize the thrust or the fuel saving amount. The display device 64 can display other types of information necessary for the crew member to consider sailing, for example, the wind conditions (in addition to wind speed and wind direction, fluctuation status of the wind) and the sea conditions (wave height, wave direction, and period). The display device 64 can display information on an optimal needle course and a sailable course range from the current wind conditions. The display device 64 can issue an alert when the wind propulsion unit 10 cannot effectively exhibit the thrust with respect to the target course due to a reason such as the wind conditions (stall or separation). The display device 64 can display the status of the main engine 16 (during operation, on standby, during warm-up, or the like) or the statuses of the generator 39 and the battery 40. The display device 64 can display the status of the propeller (rotation speed, pitch angle, thrust, horsepower, or the like) or the rudder angle. The visual information may be shown as in an infographics.

The present invention is not limited to the above-described embodiment.

The structure of the hull 11 is not limited to the structure shown in FIG. 1, and may be changed as appropriate in accordance with the application or the like. In the above-described embodiment, the rotor sail is described as the wind propulsion unit, but the wind propulsion unit is not particularly limited as long as the wind power is used, and a rigid sail, a fabric sail, a suction sail, or the like may be adopted.

The images shown in the above-described drawings are merely examples, and may be changed as appropriate within the scope of the concept of the present invention.

### Brief Description of the Reference Symbols

- 1:: ship
- 11:: hull
- 10:: wind propulsion unit
- 12:: propulsion device
- 64:: display device

## Claims

1. A display device (64) that displays information related to a ship (1) provided with a wind propulsion unit (10) on a hull (11),
wherein the display device (64) visualizes an operation status of the hull (11) relative to environmental information.

2. The display device (64) according to claim 1,
wherein the display device (64) visualizes a moment acting on the hull (11) based on a force generated by the wind propulsion unit (10).

3. The display device (64) according to claim 1,
wherein the display device (64) visualizes a status of a force generated by the wind propulsion unit (10).

4. The display device (64) according to claim 1,
wherein the display device (64) visualizes a relationship between a ship speed of the ship (1) and a required output, and visualizes a status of involvement of an output of the wind propulsion unit (10) in the required output.

5. The display device (64) according to claim 1,
wherein the display device (64) visualizes a charge level of a battery (40).

6. The display device (64) according to claim 1,
wherein the ship (1) includes, as navigation modes of the ship (1), at least:
an engine-driven mode in which the ship (1) is propelled only by a propulsion device (12);
an engine-sailing mode in which the ship (1) is propelled by both the propulsion device (12) and the wind propulsion unit (10); and
a sailing mode in which the ship (1) is propelled only by the wind propulsion unit (10), and
the display device (64) visualizes the navigation mode that is being set.

7. The display device (64) according to claim 1,
wherein the display device (64) visualizes power balance in the ship (1).

8. The display device (64) according to claim 1,
wherein the display device (64) visualizes a fuel economy effect achieved by the wind propulsion unit (10).

9. The display device (64) according to claim 1,
wherein the display device (64) shares visualization information with land.

10. A display device (64) that displays information related to a ship (1) provided with a wind propulsion unit (10) on a hull (11),
wherein the display device (64) visualizes a utilization ratio between engine propulsion using a propulsion device (12) and wind propulsion using the wind propulsion unit (10) in real time.

11. The display device (64) according to claim 9,
wherein the display device (64) visualizes a moment acting on the hull (11) based on a force generated by the wind propulsion unit (10).

12. A display device (64) that displays information related to a ship (1) provided with a wind propulsion unit (10) on a hull (11),
wherein the display device (64) visualizes an amount of energy saved by using the wind propulsion unit (10) compared to a case where a propulsion device (12) is used.

13. The display device (64) according to claim 11,
wherein the display device (64) visualizes an amount of energy saved by performing turning using the moment acting on the hull (11) compared to a case where steering is performed, based on thrust generated by the wind propulsion unit (10).

14. A ship (1) comprising:
the display device (64) according to any one of claims 1 to 13.
